# EUROPEAN PATENT SPECIFICATION

(11) **EP 4 198 627 B1**
(45) Date of publication and mention of the grant of the patent: **15.04.2026**
(21) Application number: 21913104.2
(22) Date of filing: 11.08.2021
(51) Int. Cl.: G03B 15/05, H04N 23/56, H04N 23/74

(54) **LIGHT SUPPLEMENTING LAMP FOR HEMISPHERICAL CAMERA AND HEMISPHERICAL CAMERA**
LICHTERGÄNZENDE LAMPE FÜR HALBKUGELFÖRMIGE KAMERA UND HALBKUGELFÖRMIGE KAMERA
LAMPE D'APPOINT POUR CAMÉRA HÉMISPHÉRIQUE ET CAMÉRA HÉMISPHÉRIQUE

(30) Priority: 30.12.2020 CN 202011619450; 30.12.2020 CN 202011621582
(43) Date of publication of application: 21.06.2023
(73) Proprietor: Hangzhou Hikvision Digital Technology Co., Ltd., Hangzhou, Zhejiang 310051 (CN)
(72) Inventor: YE, Beibei, Hangzhou, Zhejiang 310051 (CN); LIANG, Xue, Hangzhou, Zhejiang 310051 (CN)
(74) Representative: BRP Renaud & Partner mbB Rechtsanwälte Patentanwälte Steuerberater
(86) International application number: PCT/CN2021/112006
(87) International publication number: WO 2022/142356

(56) References cited:
- CN-A- 103 636 012
- CN-A- 104 765 226
- CN-A- 111 698 406
- CN-U- 204 334 746
- CN-U- 207 527 398
- KR-B1- 101 706 719
- TW-U- M 461 073
- US-A1- 2008 158 854
- US-A1- 2010 085 761
- US-A1- 2011 008 035
- US-A1- 2020 120 239
- US-B1- 6 381 415

## Description

### Technical field

The disclosure belongs to the technical field of security monitoring, and specifically relates to a light supplementing lamp for a hemispherical camera and the hemispherical camera.

### Background

In the situation of low illumination, cameras generally use supplementary light to obtain images in low illumination. At present, the common solution is to surround the lens with supplementary light, that is, surround several light supplementing lamps around the lens, and set a protective cover or a transparent mirror in front of the light supplementing lamps to redistribute the light emitted by the light supplementing lamps.

The hemispherical camera is arranged with a transparent spherical cover outside the lens and the light supplementing lamp and covers the lens and the light supplementing lamp, and a light isolating device is arranged between the lens and the light supplementing lamp to prevent the image from turning white due to the refraction of the light from the light supplementing lamp into the lens. However, when dust and dirt are attached to the transparent spherical cover, the refraction angle of the light emitted by the light supplementing lamp changes, which easily leads to the light entering the lens, thus affecting the quality of the images taken by the hemispherical camera.

An example for a hemispherical camera is disclosed in KR101706719B.

### Summary

An embodiment of the present disclosure aims to provide a light supplementing lamp for a hemispherical camera and the hemispherical camera, which can solve the problem of poor shooting effect of conventional hemispherical cameras.

The invention is set out in the appended set of claims.

In the embodiment of the present disclosure, the reflecting element and the lamp cover are respectively arranged at two sides of the lamp source, and the reflecting element is arranged opposite to the lamp source, so that the light supplementing source generated by the lamp source irradiates on the reflecting element, and the light supplementing source is reflected by the reflecting element, such that the light supplementing source irradiates towards the lamp cover, and the light supplementing source, after reflected by the reflecting element, is transmitting outward through the lamp cover. Compared with the way of arranging the light supplementing lamp around the lens in the related art, the light supplementing lamp provided by the embodiment of the present disclosure can adjust the irradiation area of the light supplementing source through the reflecting element and the lamp cover, so that the light supplementing area of the light supplementing lamp is adapted to the video monitoring area of the hemispherical camera, and the adjusted irradiation area of the light supplementing source hardly enters the lens component of the hemispherical camera and will not be blocked, thereby alleviating the problem of light entering the lens component or being blocked and affecting the shooting effect.

In the embodiment of the present disclosure, the lamp source is located inside the lampshade and is arranged towards the inside of the lampshade, and the reflecting surface of the reflecting element is arranged opposite to the lamp source, so that the light supplementing source generated by the lamp source is irradiated towards the light supplementing hole through the reflection of the reflecting surface, and then the light supplementing source is transmitted to the outside of the hemispherical camera through the lamp cover and the transparent hood sequentially. According to the embodiment of the present disclosure, the emission direction of the light supplementing source is adjusted through the reflecting surface, so that there is almost no light supplementing source within the design requirement range facing the lens component so that the directed light supplementing source is outside the direction of the lens component. Therefore, even if dust and dirt attached to the transparent hood refract the light supplementing source, there will be no light supplementing source in the direction of the lens component, thus effectively alleviating the problem of light entering the lens component and affecting the shooting effect.

### Brief Description of the Drawings

Fig. 1 is a first perspective view of a structure of a light supplementing lamp and the like disclosed in an embodiment of the present disclosure;
Fig. 2 is a second perspective view of a structure of a light supplementing lamp and the like disclosed in an embodiment of the present disclosure;
Fig. 3 is a third perspective view of a structure of a light supplementing lamp and the like disclosed in an embodiment of the present disclosure;
Fig. 4 is a schematic sectional view taken along M-M in Fig. 3;
Fig. 5 is a schematic diagram of the light path emitted by the light supplementing lamp located at one side of the lens component disclosed in an embodiment of the present disclosure;
Fig. 6 is a schematic diagram of the light path emitted by the light supplementing lamps located at two sides of the lens component disclosed in an embodiment of the present disclosure;
Fig. 7 is a schematic diagram of the assembly of a lamp plate and a reflective substrate disclosed in an embodiment of the present disclosure;
Fig. 8 is a schematic diagram of the assembly of a lamp source and the lamp plate disclosed in an embodiment of the present disclosure;
Fig. 9 is a schematic diagram of a reflective substrate disclosed in an embodiment of the present disclosure;
Fig. 10 is a schematic diagram of a reflecting device and a lamp source disclosed in an embodiment of the present disclosure;
Fig. 11 is a schematic sectional view taken along N-N in Fig. 10;
Fig. 12 is a schematic sectional view taken along S-S in Fig. 10;
Fig. 13 is a schematic diagram of the assembly of a lampshade and a lamp cover disclosed in an embodiment of the present disclosure;
Fig. 14 is a schematic diagram of a lamp cover disclosed in an embodiment of the present disclosure;
Fig. 15 is a schematic diagram of the disassembly of the lampshade, the lamp cover, the lamp source component, the reflecting element and the front end component disclosed in an embodiment of the present disclosure;
Fig. 16 is a partial sectional schematic view of a hemispherical camera disclosed in an embodiment of the present disclosure;
Fig. 17 is a schematic diagram of the hemispherical camera (with the transparent hood removed) disclosed in an embodiment of the present disclosure.

### Reference Signs:

10- light supplementing lamp component;
100- lamp source component;
110- lamp source; 120- lamp plate; 121- first positioning hole; 122- first through hole; 123- protrusion;
210- reflecting element; 211- first surface; 212- second surface; 213- end face; 214- concave space;
220- reflective substrate; 221- second positioning hole; 222- second through hole;
300- light transmitting component; 310- lamp cover; 320- hook;
400- lens component;
500- transparent hood;
600- lampshade; 610- lens hole; 620- light supplementing hole; 630- positioning column; 640- threaded hole; 650- notch; 660- limiting part; 670- first flanging structure; 680- second flanging structure;
700- fastener;
800- light barrier;
900- front-end component;
1000- hemispherical base;
α-first included angle; β-second included angle.

### Detailed Description

In the following, the technical solution in the embodiment of the present disclosure will be clearly and completely described with reference to the attached drawings. Obviously, the described embodiment is a part of the embodiments of the present disclosure, but not the whole embodiments.

The terms "first" and "second" in the description and claims of the present disclosure are used to distinguish similar objects, and are not used to describe a specific order or sequence. It should be understood that the data used in this way can be interchanged under appropriate circumstances, so that the embodiments of the present disclosure can be implemented in an order other than those illustrated or described here, and the objects distinguished by "first", "second" and the like are usually of one class, and the number of objects is not limited, for example, the first object can be one or more. In addition, "and/or" in the specification and claims means at least one of the connected objects, and the character "/"generally indicates that the associated objects are in an "or" relationship.

In the following, the device provided by the embodiment of the present disclosure will be described in detail through specific embodiments and application scenarios thereof with reference to the attached drawings.

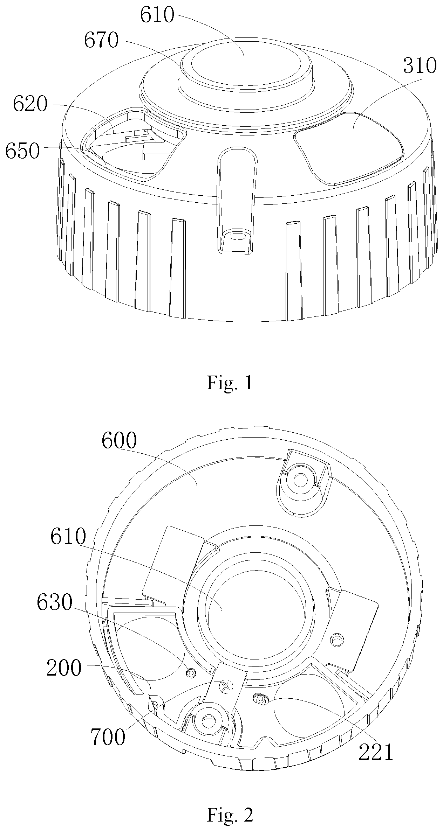

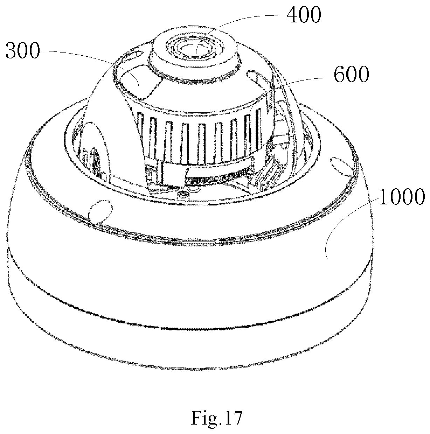

As shown in Fig. 1 to Fig. 17, an embodiment of the present disclosure discloses a light supplementing lamp for a hemispherical camera, the disclosed light supplementing lamp comprises a lamp source 110, a reflecting element 210 and a lamp cover 310.

The lamp source 110 is used to generate a light supplementing source. Specifically, the light supplementing source generated by the lamp source 110 can be a 3000K or 5700K light supplementing source. In a specific embodiment, the lamp source 110 may be a lamp bead, and the lamp source may be arranged on one side of a lamp plate 120, the lamp plate 120 is a circuit plate. The lamp plate 120 is electrically connected with the lamp source 110, and supplies power to the lamp source 110 through the lamp plate 120. And, the lamp source 110 is mechanically connected to the lamp plate 120, and the lamp source 110 is fixed to other members through the lamp plate 120 to limit the position of the lamp source 110 and ensure to keep the lamp source 110 arranged opposite to the reflecting element 210.

The reflecting element 210 is used to reflect the light supplementing source generated by the lamp source 110. Specifically, the reflecting element 210 is arranged opposite to the lamp source 110, so that the light supplementing source generated by the lamp source 110 irradiates the surface of the reflecting element 210 and then is reflected on the surface of the reflecting element 210 to change the irradiation direction of the light supplementing source. In a specific embodiment, the reflecting element 210 is arranged on the reflective substrate 220, and the reflecting element 210 is fixed on other members through the reflective substrate 220 to limit the position of the reflecting element 210, so as to keep the reflecting element 210 arranged opposite to the lamp source 110. At the same time, a smooth surface, i.e., a reflecting surface, is formed on the reflecting element 210, and the light supplementing source is reflected by the reflecting surface.

The lamp cover 310 is used to pass the light supplementing source reflected by the reflecting element 210. Specifically, the lamp cover 310 is arranged on the side of the lamp source 110 away from the reflecting element 210. The lamp cover 310 is a member of transparent material and is fixed on other members, so that the light supplementing source reflected by the reflecting element 210 is transmitted outward through the lamp cover 310. In a specific embodiment, the lamp cover 310 may be a transparent cover, hood and other structures. The lamp cover 310 covers the outside of the reflecting element 210 and the lamp source 110, which may prevent external dust, impurities, rain and the like from contacting with the reflecting element 210 or the lamp source 110 on the one hand, and prevent the operator from touching the reflecting element 210 or the lamp source 110 when repairing or maintaining the hemispherical camera which will affect the light supplementing effect of the light supplementing lamp or cause danger on the other hand.

In the embodiments, as a light-emitting member of the hemispherical camera, the light supplementing lamp may provide a light supplementing source for the lens component 400 of the hemispherical camera, so as to ensure that the lens component 400 may still shoot high-quality images in a low illumination environment.

The principle of light supplementing in the embodiment of the present disclosure is as follows: after the hemispherical camera is started, the lamp source 110 generates a light supplementing source and irradiates the surface of the reflecting element 210 opposite to the lamp source 110, and the irradiation direction of the light supplementing source is changed through the reflection of the surface of the reflecting element 210, so that the light supplementing source irradiates toward the lamp cover 310 and the light supplementing source transmits outward through the lamp cover 310, thereby forming a light supplementing area near the lens component 400. And the light supplementing area is suitable for the video monitoring area of the hemispherical camera, that is, the supplementary light is applied to the monitoring area of the lens component 400, so as to ensure the normal shooting of the lens component 400 even in the low illumination environment.

Compared with the way of arranging the lamp source around the lens and emitting light directly in the related art, in the embodiment of the present disclosure, the reflection of the light supplementing source is realized by the reflecting element 210, so that the irradiation range of the light supplementing source is adjusted, and the light supplementing area of the light supplementing lamp is adapted to the video monitoring area of the hemispherical camera, and the light will not be blocked, so as to alleviate the problem that the light supplementing source enters the lens or the light is blocked which affects the shooting effect.

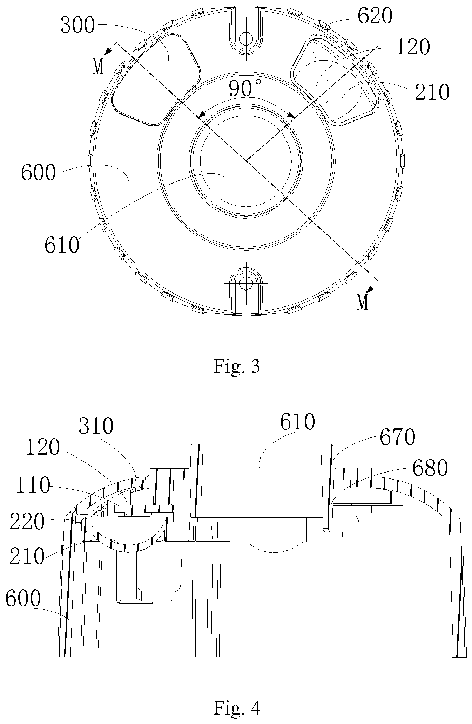

In the embodiments, the reflecting element 210 and the lamp cover 310 are longitudinally arranged on two sides of the lamp source 110, respectively. Referring to Fig. 4, in a specific embodiment, in the longitudinal direction (i.e., the up-down direction in Fig. 4), the reflecting element 210 is arranged below the lamp source 110. In order to fix the lamp source 110, the lamp source 110 is arranged on the lower side of the lamp plate 120, and the lamp plate 120 is fixed to other members, such as a lampshade, etc. At the same time, the reflecting element 210 is formed on the reflective substrate 220, the reflective substrate 220 is fixed on other members, such as a lampshade, etc. The reflecting element 210 has a reflective surface. After the lamp plate 120 and the reflective substrate 220 are both fixed, the lamp source 110 is arranged opposite to the reflective surface of the reflecting element 210, so that the light supplementing source generated by the lamp source 110 can be reflected by the reflective surface. In addition, in the longitudinal direction, the lamp cover 310 is arranged above the lamp source 110, and the lamp cover 310 may receive the light supplementing source reflected by the reflecting surface, so that the light supplementing source may be transmitted outward after passing through the lamp cover 310. It should be noted here that in some cases, when the hemispherical camera is normally installed, the lamp cover 310 is located below the lamp source 110 and the reflecting element 210 is located above the lamp source 110. Of course, the relative position relationship among the lamp cover 310, the lamp source 110 and the reflecting element 210 may be determined according to the specific installation situation of the hemispherical camera, which is not limited in the embodiment of the present disclosure.

In some embodiments of the present disclosure, the cross section of the reflecting element 210 in a first direction (i.e., the longitudinal direction) is arc-shaped, wherein the first direction is parallel to the longitudinal direction. Please refer to Fig. 4. The reflecting element 210 presents a concave structure as a whole, and the inner surface of the concave structure is the reflecting surface, and the lamp source 110 is arranged opposite to the inner surface of the concave structure, so that a reflection occurs when the supplementary light generated by the lamp source 110 irradiates on the reflecting surface, and the reflection angle is influenced by the size of the reflection surface and the relative position between the reflection surface and the lamp source 110. Under the action of the arc-shaped reflecting surface, all the light supplementing sources generated by the lamp source 110 irradiate towards the lamp cover 310 and are transmitted outward via the lamp cover 310, so as to ensure that the light supplementing area generated by the light supplementing lamp is suitable for the video monitoring area of the hemispherical camera.

In a specific embodiment, the lamp source 110 is arranged above the reflecting device in the longitudinal direction, and the arrangement position of the lamp source 110 deviates from the geometric center of the reflecting element 210, so that the light supplementing source reflected by the reflecting element 210 is transmitted outward via the lamp cover 310 to ensure that the light supplementing area generated by the light supplementing lamp is suitable for the video monitoring area of the hemispherical camera.

In a specific embodiment, the inner surface of the reflecting element 210 is electroplated with a silver layer, so that the inner surface of the reflecting element 210 has a better reflection effect, so as to alleviate the weakening effect on the light supplementing source. Here, it should be noted that the inner surface of the reflecting element 210 may be regarded as a reflecting surface, when it is electroplated with the silver layer, the reflecting effect of the reflecting surface will be better, thus ensuring the good reflecting effect of the reflecting surface on the light supplementing source.

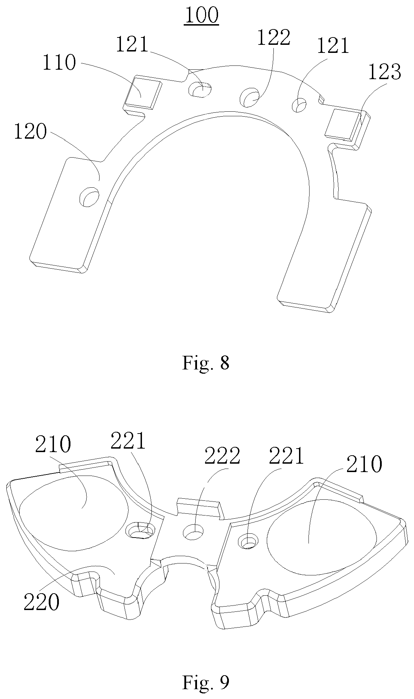

Please refer to Figs. 8 to 12, in some optional embodiments, the reflecting element 210 includes a first surface 211, a second surface 212 and an end face 213, wherein the first surface 211 and the second surface 212 constitute a concave space 214, and the first surface 211 and the second surface 212 are connected through the end face 213. Specifically, the second surface 212 is away from the first surface 211, and both the first surface 211 and the second surface 212 are arc-shaped in the longitudinal direction. The first surface 211 is located at the inner side and the second surface 212 is located at the outer side. The concave space 214 is formed on the side of the first surface 211 away from the second surface 212, and the inner surface of the concave space 214 or the first surface 211 may be regarded as a reflecting surface, and the lamp source 110 is arranged at one side of the concave space 214 and is arranged opposite to the inner surface of the concave space 214, so that the light supplementing source generated by the lamp source 110 irradiates the inner surface of the concave space and is reflected there.

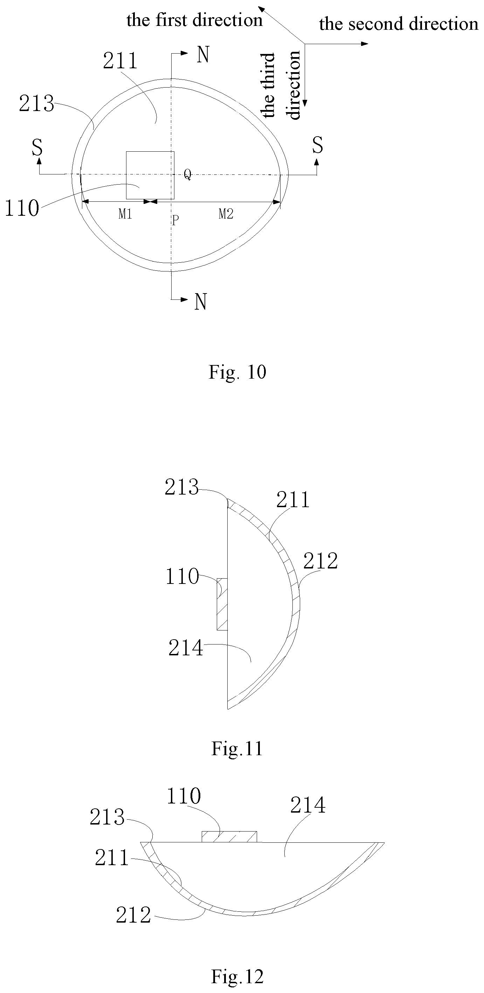

Please continue to refer to Fig. 10. In a specific embodiment, the distance between the two sides of the end face 213 in the second direction is greater than the distance between the two sides of the end face 213 in the third direction, that is, the length of the concave space 214 in the second direction is greater than that in the third direction, so that the concave space 214 is appeared to be long concave or elliptic-like. In this way, the long axis direction of the reflecting element 210 is the second direction, the short axis direction is the third direction, and the depth direction of the concave space 214 is the first direction, and the first direction, the second direction and the third direction are perpendicular to each other.

In some embodiments of the present disclosure, in the second direction, the distances between the arrangement position of the lamp source 110 and two sides of the end face 213 are not equal. Optionally, the lamp source 110 is biased to one side of the end face 213 in the second direction (i.e., the left side in Fig. 10), so that the reflected lights on the two sides of the lamp source 110 on the first surface 211 are asymmetrical to satisfy the actual arrangement requirements of the relative position between the light supplementing lamp and the lens component 400 in the second direction. In some embodiments of the present disclosure, please refer to Fig. 10. The ratio M1:M2 of the distances between the arrangement position of the lamp source 110 and two sides of the end face 213 is less than 1. Similarly, in the third direction, the distances between the arrangement position of the lamp source 110 and two sides of the end face 213 are equal. Specifically, the lamp source 110 is located in the middle position along the third direction, so that the reflected light on two sides of the lamp source 110 on the first surface 211 is symmetrical to satisfy the actual arrangement requirements of the relative position between the light supplementing lamp and the lens component 400 in the third direction.

In a specific embodiment, the concave space 214 of the reflecting element 210 presents an oval shape. Please refer to Figs. 8 to 10 for details. The short axis P of the concave space 214 is 11.2mm and the long axis Q is 12.5mm. The center of the lamp source 110 is located on the middle line of the short axis of the concave space 214, and the ratio of the distances between the center of the lamp source 110 and two sides of the end face 213 along the long axis direction is M1:M2. Specifically, M1: M2=4.4:8.1. At this time, the light emitting surface of the lamp source 110 almost coincides with the reflecting surface.

In a specific embodiment, the cross section of the reflecting element 210 in the second direction has a varying curvature and the cross section in the third direction has a varying curvature. Based on this arrangement method, the overall structure of the reflecting element 210 is guaranteed to a certain extent, and at the same time, it is beneficial to the manufacture of the entire reflecting element 210.

An embodiment of the present disclosure discloses a hemispherical camera, which includes a light supplementing lamp, a lens component 400 and a transparent hood 500.

As a light-emitting member of the hemispherical camera, the light supplementing lamp is used to provide a light supplementing source. Specifically, the light supplementing lamp may include a lamp source component 100, a reflecting element 210 and a light transmitting component 300, wherein the lamp source component 100 includes a lamp source 110 and a lamp plate 120, and the lamp source 110 is arranged at one side of the lamp plate 120, the lamp plate 120 may be a circuit plate, which can provide power for the lamp source 110 on the one hand and can provide an installation foundation for the lamp source 110 on the other hand. The reflecting element 210 is arranged on the reflective substrate 220, specifically, the reflecting element 210 can be integrally arranged with the reflective substrate 220, or the reflecting element 210 may be fixed on the reflective substrate 220, the reflecting element 210 is fixed by the reflective substrate 220 so that the reflecting element 210 is arranged opposite to the lamp source 110. The light transmitting component 300 comprises a transparent lamp cover 310 and a hook 320 arranged on the lamp cover 310, wherein the lamp cover 310 is a protective cover, and the protective cover is arranged outside the reflecting element 210 and the lamp source 110 and covers the reflecting element 210 and the lamp source 110, so as to prevent, on the one hand, external dust, impurities, etc. from adhering to the surface of the reflecting element 210 or the lamp source 110 and affecting the light supplementing effect, and on the other hand, to prevent an operator from touching the reflecting element 210 or the lamp source 110 and affecting the light supplementing effect or causing danger.

The lens component 400, as the core member of the hemispherical camera, is used to take photos and videos of the external environment to collect information in the external environment.

The transparent hood 500 is a protective member of the hemispherical camera. The transparent hood 500 has a hemispherical shape, and is arranged outside the lens component 400, the light supplementing lamp and other structural members, so as to prevent the dust, impurities, rain and the like in the external environment from entering the interior of the hemispherical camera, and protect the hemispherical camera from the influence of the dust, impurities and rain in the external environment to a certain extent, thereby ensuring the high-quality photographing and shooting functions of the hemispherical camera.

In the embodiment of the present disclosure, the specific working principle of the hemispherical camera is as follows:
the lamp source 110 of the light supplementing lamp generates a light supplementing source, which irradiates toward the reflecting element 210, the light supplementing source reflected by the reflecting element 210 changes the original direction and irradiates toward the lamp cover 310. After passing through the lamp cover 310, the light supplementing source is transmitted to the outside through the transparent hood 500, thus forming a light supplementing area around the lens component 400, and the light supplementing area is adapted to the video monitoring area of the lens component 400, thereby ensuring that the video monitoring area of the lens component 400 has a good illumination to improve the shooting quality.

Compared with the way that some hemispherical cameras surround several supplement lamps around the lens, and directly supplement the light for the lens through the light supplementing lamps in the related art, in the embodiment of the present disclosure, the light supplementing source generated by the lamp source 110 is reflected by the reflecting element 210, and the reflected light supplementing source is projected in the direction of the transparent hood 500 by the lamp cover 310. At this time, the adjusted light supplementing source hardly enters the lens component 400 and will not be blocked, thereby alleviating the problem of light entering the lens component 400 or being blocked and affecting the shooting effect, and guaranteeing the shooting effect to a certain extent.

Please refer to Fig. 1 and Fig. 3, in some optional embodiments, the hemispherical camera includes two groups of light supplementing lamps, and the positions of the two groups of light supplementing lamps relative to the lens component 400 may be determined according to the actual situation. For example, when taking a camera with a focal length of 4mm as an example, the field angle of the lens is 90°, and the included angle between the connecting lines of the geometric centers of the respective reflecting elements 210 of the two groups of light supplementing lamps and the optical axis of the lens component 400 is 90°. And the reflecting elements 210 of the two groups of light supplementing lamps are bilaterally symmetrical with respect to the optical axis of the lens component 400. Since the ball head has a certain range of rotation and pitching within the spherical cover, the influence of the hemispherical base 1000 on the light when the ball head is pitching may be avoided to the maximum extent based on the above arrangements.

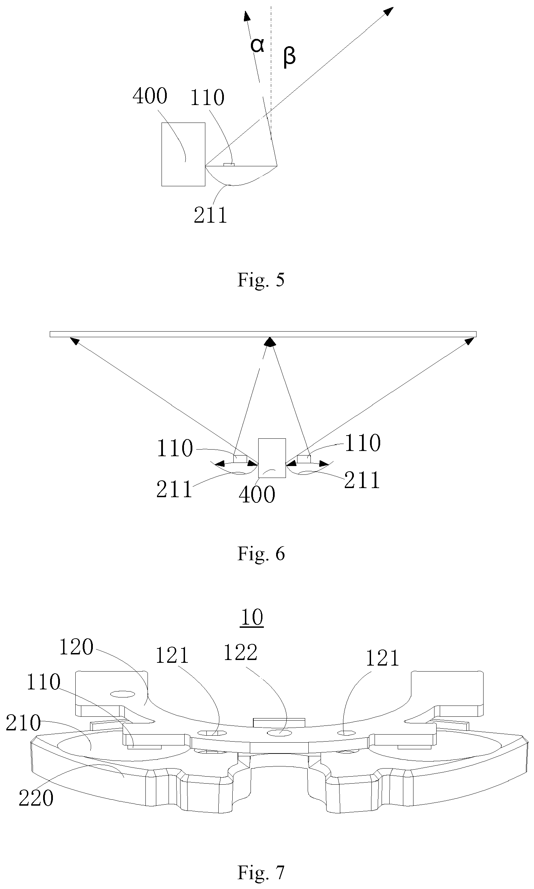

In order to avoid the defect of spot superposition, when designing, the first edge line of the light emitted by each group of light supplementing lamps is deflected to the direction of the lens component 400 by a first included angle α with respect to the central axis of the lens component 400, and the second edge line is deflected to the direction away from the lens component 400 by a second included angle β with respect to the central axis of the lens component 400. The first included angle α is smaller than the second included angle β. Please refer to Figs. 5 and 6 for details. Based on this arrangement, the light supplementing sources emitted by the light supplementing lamps may be spliced to form a whole light supplementing area, so as to ensure that the light supplementing area of the light supplementing lamps is adapted to the video monitoring area of the lens component 400.

In a specific embodiment, the angle range of the first included angle α shall not be greater than 5°, specifically including 0.5°, 1°, 1.5°, 1.9°, 2.2°, 2.7°, 3.5°, 4.2°, 5°, and so on, and also including other degrees. In the embodiment of the present disclosure, the first included angle α may be 1.9°. The angle range of the second included angle β shall not be less than 30°, specifically including: 30°, 35°, 40°, 45°, 50°, 55°, and so on, and also including other degrees. In the embodiment of the present disclosure, the second included angle β may be 45°. Based on the above arrangement, through the two groups of light supplementing lamps bilaterally symmetrically arranged, the light supplementing sources emitted by them may be spliced into a whole field of light supplementing area, so that the defect of spot superposition can be avoided.

In the embodiment of the present disclosure, in order to fix the lamp source 110, the reflecting element 210, the lamp cover 310 and other structural members, the hemispherical camera further includes a lampshade 600. Please refer to Fig. 1 to Fig. 4, one end of the lampshade 600 is provided with a lens hole 610. Specifically, a protruding structure may be arranged in the middle of one end of the lampshade 600, and a hole is formed in the protruding structure to form the lens hole 610. The rear end of the lens component 400 is inserted into the lens hole 610 and fixed, the front end of the lens component 400 faces the outside of the lampshade 600, and the lens component 400 can be fixedly installed by means of the lampshade 600. At the same time, one end of the lampshade 600 is also provided with a light supplementing hole 620, the light supplementing hole 620 is arranged in the surrounding area of the lens hole 610, and the light supplementing hole 620 is opposite to the light emitting direction of the light supplementing lamp. Specifically, the lamp cover 310 is installed at the light supplementing hole 620, so that the light supplementing source reflected by the reflecting element 210 irradiates towards the direction of the light supplementing hole 620, and then transmits out through the lamp cover 310 and the transparent hood 500 sequentially, in order to realize light supplementing for the video monitoring area of the lens component 400. Optionally, one, two or more light supplementing holes 620 can be set on one end of the lampshade 600, and the specific number may be determined according to the number of light supplementing lamps. In the embodiment of the present disclosure, two light supplementing holes 620 are provided, which are suitable for two groups of light supplementing lamps.

In a specific embodiment, the outer side of one end of the lampshade 600 is provided with a notch 650, the notch 650 is arranged around the light supplementing hole 620, that is, an annular notch 650 is recessed at the outer port of the light supplementing hole 620, and the lamp cover 310 may be partially embedded in the notch 650 to realize assembly. Specifically, the lamp cover 310 is a transparent protective cover, and when it is installed, the protective cover is embedded into the notch 650, thus preventing the protective cover from protruding to affect the appearance or the light emission. In order to fix the protective cover on the lampshade 600, a plurality of hooks 320 extending inward are arranged on the protective cover, and the openings of the plurality of hooks 320 are respectively away from the protective cover; correspondingly, a limiting part 660 is arranged on the inner side of the lampshade 600 and around the light supplementing hole 620, and the hooks 320 and the limiting part 660 together form a buckle structure, and the connection between the lamp cover 310 and the lampshade 600 is realized through the buckle structure to facilitate the disassembly of the lamp cover 310. When installing the protective cover, the hook 320 is inserted into the interior of the lampshade 600 through the light supplementing hole 620, and then pressed down the protective cover, to embed the protective cover into the notch 650. At this time, the hook 320 is hooked on the limiting part 660 correspondingly, so as to install the protective cover on the lampshade 600. Based on the arrangement of the notch 650, it is beneficial for the light supplementing source reflected by the reflecting element 210 to be directed outward, and the protective cover can cover the reflecting element 210 and the lamp source 110, thus preventing external dust, impurities and rainwater from entering the interior of the hemispherical camera, and at the same time avoiding the damage or danger caused by touching the lamp plate 120 or the reflecting element 210 when an user adjusts the hemispherical camera.

In order to prevent the protective cover from interfering with the light supplementing source transmitted outward, optionally, the protective cover is made of highly light transparent material, so as to reduce the displacement change caused by refraction of the light supplementing source in the protective cover and affect the emission direction of the light supplementing source. In a specific embodiment, the thickness of the light-transmitting area of the protective cover is relatively uniform, that is, the curved surfaces of the inner surface and the outer surface are parallel to each other, so as to ensure that the angle of light does not change when transmitting through the protective cover.

In some embodiments of the present disclosure, the light-transmitting area of the protective cover is not less than the area of the light supplementing source emitted by the light supplementing lamp, so as to ensure that the light supplementing source will not be blocked by other opaque structures. Moreover, the area of the lampshade 600 where the notch 650 is provided is larger than the light-transmitting area of the protective cover, so as to facilitate the assembly of the protective cover.

Please refer to Fig. 4, Fig. 7 and Fig. 8. In the embodiments, the light supplementing lamp further comprises a lamp plate 120, and the lamp source 110 is arranged at one side of the lamp plate 120, which can be used for fixing the lamp source 110 and also supplying power to the lamp source 110.

In order to fix the lamp plate 120, the lamp plate 120 is designed as a concave structure in the embodiment of the present disclosure, it may also be regarded as a U-shaped structure or a partial annular structure. Specifically, an avoidance space is formed inside the lamp plate 120, and the lens component 400 may pass through the avoidance space; the lampshade 600 may be designed as a cylindrical structure, the inner peripheral surface of the lampshade 600 is arc-shaped, and the outer peripheral surface of the lamp plate 120 is also designed as an arc shape, and the size of the arc shape of the outer peripheral surface of the lamp plate 120 is smaller than that of the inner peripheral surface of the lampshade 600, so that the lamp plate 120 may be accommodated inside the lampshade 600.

In the embodiment of the present disclosure, due to adopting the way of reverse illumination, the lamp source 110 can't be blocked by too many obstructions to avoid affecting the light-transmitting efficiency, and changing the light type. Considering the factors of shading, fixing and heat dissipation, etc., the lamp plate 120 is designed as a strip plate with a width of 4mm, and the strip plate is enclosed in a concave, U-shaped or partially annular shape to satisfy the actual requirements.

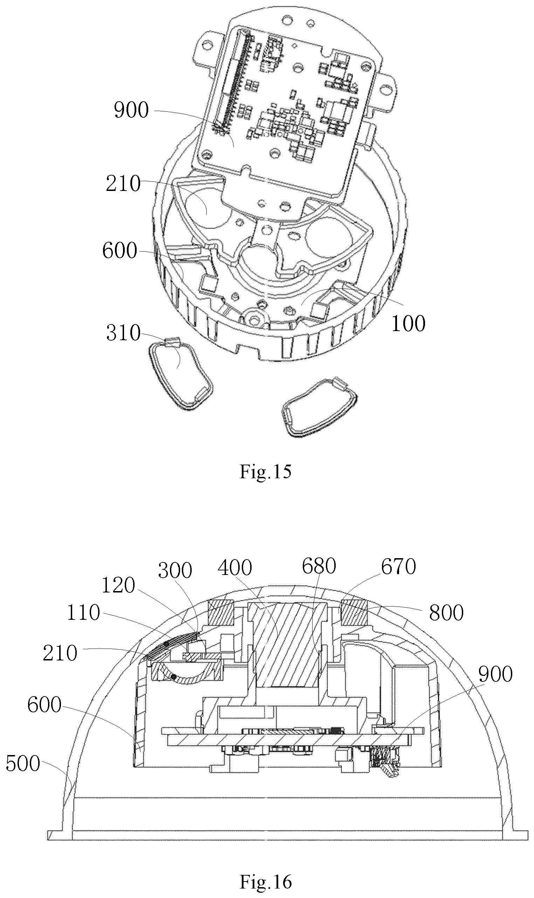

Please refer to Fig. 16, in some embodiments of the present disclosure, a first flanging structure 670 is arranged outside one end of the lampshade 600, and a light barrier 800 is sleeved on the outer peripheral surface of the first flanging structure 670. The light barrier 800 is adhered to the outer peripheral surface of the first flanging structure 670 by double-sided adhesive, and the light supplementing source emitted from the light supplementing lamp component 10 can be separated from the lens component 400 by the light barrier 800, so as to prevent the light supplementing source from entering the lens component 400 and affecting the shooting effect. Optionally, the light barrier 800 may be foam or silica gel.

Please continue to refer to Fig. 16, in some embodiments of the present disclosure, a second flanging structure 680 may be arranged inside one end of the lampshade 600, and the position of the second flanging structure 680 in the longitudinal direction protrudes from the contact surface between the reflecting element 210 and the lamp plate 120. Specifically, since the reflecting element 210 and the lamp plate 120 are fit each other, when a gap occurs due to their loose fit, the light supplementing source generated by the lamp source 110 penetrates through the gap and enters into the lens component 400. Based on this, the gap between the reflecting element 210 and the lamp plate 120 can be blocked by the second flanging structure 680, thus effectively preventing the light supplementing source from entering into the lens component 400 and affecting the shooting effect. In addition, the arrangement of light barrier 800 such as foam and silica gel can also be replaced by arranging the second flanging structure 680, thus effectively saving the cost.

The hemispherical camera disclosed in the embodiment of the present application further comprises a front-end component 900 and a hemispherical base 1000. Please refer to Figs. 15 to 17 for details. Sheet metal parts are fixedly installed inside the lampshade 600, and the front-end component 900 is fixedly installed on the sheet metal parts by screws. The lampshade 600 is fixed on the hemispherical base 1000, and the lampshade 600 may move relative to the hemispherical base 1000 to adjust the shooting angle of the lens component 400. It should be noted here that the specific structures and working principles of the above-mentioned members such as the front-end component 900 and the hemispherical base 1000 can refer to related technologies, and will not be described in detail here.

Referring to Figs. 1 to 17, the embodiment of the present disclosure also discloses a hemispherical camera, which includes a lampshade 600, a transparent hood 500 and a light supplementing lamp component 10.

The lampshade 600 is the basic installation member of the hemispherical camera, and the lampshade 600 is used to provide the installation foundation for some structural members of the hemispherical camera. Specifically, the lampshade 600 can be a cylindrical shell, the middle area of the lampshade 600 is provided with a lens hole 610, the lens component 400 is arranged in the lens hole 610, and the lens end of the lens component 400 is towards the outside of the lens hole 610, so that the external environment can be shot through the lens end. In the low illumination environment, in order to improve the shooting quality of the lens component 400, it is necessary to supplement light around the lens component 400. Specifically, the surrounding area of the lens hole 610 is provided with a light supplementing hole 620, and a lamp cover 310 is installed at the light supplementing hole 620. In a specific embodiment, the lamp cover 310 is detachably installed at the light supplementing hole 620 via the hook 320. The light supplementing lamp component 10 is arranged inside the lampshade 600, and the lamp cover 310 is a transparent structural member, which, on the one hand, guarantees that the light supplementing source generated by the light supplementing lamp component 10 may be transmitted outwards through the lamp cover 310; on the other hand, since the lamp cover 310 is located outside the light supplementing lamp component 10 and covers the light supplementing lamp component 10, the phenomenon that the user touches the light supplementing lamp component 10 by hand when adjusting the hemispherical camera, which may cause danger or affect the light supplementing effect of the light supplementing lamp component 10, can be effectively avoided.

The transparent hood 500 is a protective member of the hemispherical camera. The transparent hood 500 is arranged outside the lampshade 600 and covers the lampshade 600, so that the structural members such as the light supplementing lamp component 10 and the lens component 400 are all located inside the transparent hood 500. The dust and impurities in the external environment which will dirty the structural members such as the light supplementing lamp component 10 and the lens component 400 can be prevented through the transparent hood 500, thus laying a foundation for the hemispherical camera to shoot high-quality images. In a specific embodiment, the transparent hood 500 is hemispherical, and the central axis of the transparent hood 500 coincides with the central axis of the lampshade 600, so that the transparent hood 500 can completely cover the lampshade 600 and other members.

The light supplementing lamp component 10 is a light-emitting member of a hemispherical camera. The light supplementing lamp component 10 provides a light supplementing source for the lens component 400, so as to ensure that the lens component 400 shoots a high-quality image in a low illumination environment. Specifically, the light supplementing lamp component 10 includes a lamp source 110 and a reflecting element 210, and the lamp source 110 is used for generating light supplementing sources, such as LED beads, etc. The lamp source 110 is arranged inside the lampshade 600 and the light supplementing source generated by the lamp source 110 is transmitted toward the inside of the lampshade 600. In order to make the light supplementing source transmit outward through the light supplementing hole 620, the reflecting element 210 is also arranged inside the lampshade 600. The reflecting element 210 is provided with a reflecting surface facing the lamp source 110, so that the two are arranged oppositely. In this way, the light supplementing source generated by the lamp source 110 is reflected on the reflecting surface to change the direction of the light supplementing source, and the light supplementing source reflected by the reflecting surface irradiates towards the light supplementing hole 620. The light supplementing source first transmits the lamp cover 310 at the light supplementing hole 620, then transmits the transparent hood 500, and finally directs outwards, so as to supplement light to the monitoring area of the lens component 400 by the light supplementing source, so as to ensure the normal shooting of the lens component 400 in a low illumination environment.

Compared with the way of arranging several light supplementing lamps around the lens in the related art, the embodiment of the present disclosure arranges the lamp source 110 inside the lampshade 600, which effectively prevents the light supplementing source generated by the lamp source 110 from directly entering the lens component 400, and reflects the light supplementing source by the reflecting surface of the reflecting element 210, so as to change the irradiation direction of the light supplementing source and adjust the irradiation range of the light supplementing source, so that there is almost no light in the range towards the lens component 400, and the light is actually outside the lens direction. At this time, even if the dirt on the transparent hood 500 refracts the light, the light will hardly enter into the lens component 400. Therefore, the embodiment of the present disclosure effectively solves the problem that the light enters into the lens component 400 and affects the quality of the shot image, and ensures the quality of the shot image to a certain extent.

In an optional embodiment, the reflecting element 210 and the lamp cover 310 are respectively arranged below and above the lamp source 110 in the longitudinal direction, and the reflecting surface of the reflecting element 210 is arranged opposite to the surface where the lamp plate 120 of the lamp source 110 is located. Specifically, as shown in Fig. 5, the light supplementing lamp component 10 further includes the lamp plate 120, and the lamp source 110 is arranged on one side of the lamp plate 120, the lamp source 110 may be LED beads. The lamp plate 120 is fixedly installed in the interior of the lampshade 600, and the LED lamp beads generate a light supplementing source after being powered on. When installing the lamp plate 120, the lamp plate 120 is fixed in the interior of the lampshade 600 with structural members such as screws, and the surface of the lamp plate 120 where the LED lamp beads are located on faces the interior of the lampshade 600, that is, the LED lamp beads face away from the light supplementing hole 620. At this time, the light supplementing source generated by the LED lamp beads irradiates towards the interior of the lampshade 600, and the reflecting surface is arranged opposite to the surface where the LED lamp beads are located. In this way, the light supplementing source generated by LED lamp beads is reflected when it reaches the reflecting surface, and the illuminating direction of the light supplementing source is changed through the reflecting surface so that the light supplementing source irradiates towards the direction of the light supplementing hole 620. The lamp cover 310 is installed at the light supplementing hole 620, and the lamp cover 310 is located at the side of the lamp source 110 away from the reflecting element 210, that is, the lamp cover 310 and the reflecting element 210 are respectively located at two sides of the lamp source 110. The light supplementing source transmits the lamp cover 310 first, and then transmits the transparent cover 500 and directs outwards. The above-mentioned above and below specifically refer to the relative positions among the reflecting element 210, the lamp cover 310 and the lamp source 110 in Fig. 4. When the hemispherical camera is installed normally, the lens component 400 generally has a downward measure. At this time, the lamp cover 310 is located below the lamp source 110 and the reflecting element 210 is located above the lamp source 110 in the longitudinal direction, and the specific positional relationship may be determined according to the actual installation situation of the hemispherical camera.

In the embodiment of the present disclosure, taking a camera with 4mm focal length as an example, the field angle of the lens is 90° degrees horizontally and 50° vertically, and the light supplementing area needs to satisfy the above field of view range. In order to obtain a good light supplementing effect, the light reflected by the reflecting element 210 is distributed in a rectangular shape instead of a conventional circular or elliptical shape, all the light emitted by the lamp source 110 can be distributed in the field of view range of the lens to the maximum extent, and all the light emitted by the lamp source 110 is irradiated onto the reflecting element 210.

In order to make the light supplementing area satisfy the field of view range of the lens, in the embodiment of the present disclosure, the structure of the reflecting element 210, the optical path and arrangement position of the reflecting element 210 are designed as follows:
in some embodiments of the present disclosure, the reflecting element 210 includes a reflector. The reflector may be a concave structure. The cross section of the reflector in the first direction (i.e., the longitudinal direction) is arc-shaped, and the inner concave surface of the concave structure is the reflecting surface of the reflector. When the light supplementing source generated by the lamp source 110 irradiates on the reflecting surface, reflection occurs, and the reflection angle is influenced by the specific size of the arc-shaped reflecting surface and the relative position between the lamp source 110 and the reflecting surface, and all the light of the light supplementing source reflected by the reflecting surface are distributed in the field of view range of the lens to the maximum extent.

In some embodiments of the present disclosure, the lamp source 110 is longitudinally arranged above the reflecting surface, and the arrangement position of the lamp source 110 deviates from the geometric center point of the reflecting surface.

In some embodiments of the present disclosure, as shown in Figs. 10 to 15, the reflecting element 210 is a plate-like structure as a whole, and the reflecting element 210 comprises a reflector for reflecting the light supplementing source generated by the lamp source 110, wherein the reflector comprises a first surface 211, a second surface 212 and an end face 213, and the first surface 211 and the second surface 212 form an inner concave space 214. The first surface 211 and the second surface 212 are connected by the end face 213. Specifically, the second surface 212 faces away from the first surface 211. Since the first surface 211 and the second surface 212 are both arc-shaped in the longitudinal direction and the first surface 211 is located at the inner side, a concave space 214 is formed on one side of the first surface 211, and the inner surface of the concave space 214 is the reflecting surface, that is, the first surface 211 is the reflecting surface. In a specific embodiment, the distance between the two sides of the end face 213 in the second direction is greater than the distance between the two sides of the end face 213 in the third direction, wherein both the second direction and the third direction are perpendicular to the first direction, and the second direction is perpendicular to the third direction, that is, the length of the concave space 214 in the second direction is greater than that in the third direction, so that the concave space 214 is appeared to be long and concave.

In some embodiments of the present disclosure, in the second direction, the distances between the arrangement position of the lamp source 110 and two sides of the end face 213 of the reflecting element 210 (i.e., two sides of the arc-shaped reflecting surface) are not equal, and in the third direction, the distances between the arrangement position of the lamp source 110 and two sides of the end face 213 of the reflecting element 210 (i.e., two sides of the arc-shaped reflecting surface) are equal, and the second direction is perpendicular to the third direction. Based on the above arrangement, the light is symmetrically emitted in the third direction, and the light is deflected and emitted to one side in the second direction, so that the light spot can be shifted outward.

In some embodiments of the present disclosure, in the second direction, the ratio of the distances between the arrangement position of the lamp source 110 and two sides of the end face 213 (i.e., two sides of the arc-shaped reflecting surface) is less than 1. Specifically, as shown in Fig. 10, the distance between the arrangement position of the lamp source 110 and the left side of the end face 213 is smaller than the distance between the arrangement position of the lamp source 110 and the right side of the end face 213. At this time, when the light is irradiated on the reflecting element 210, the reflected light is deflected to the right to satisfy the actual requirements. Of course, in other embodiments, when the distance between the arrangement position of the lamp source 110 and the left side of the end face 213 is greater than the distance between the arrangement position of the lamp source 110 and the right side of the end face 213, at this time, when the light is irradiated on the reflecting element 210, the reflected light is deflected to the left. When the lamp source 110 is arranged at the middle position between the left and right sides of the end face 213, and when the light is irradiated on the reflecting element 210, the light is directed symmetrically.

In the embodiment of the present disclosure, the parameters such as the size of the reflecting element 210, the relative position between the reflecting element 210 and the lamp source 110, and the size of the lamp source 110 may be determined according to the structural size of the hemispherical camera. Based on the above arrangements, in a specific embodiment, if the diameter of the spherical cover of the hemispherical camera involved is 80mm, the size of the reflecting element 210 placed in the non-lens area inside the spherical cover should not be too large, so that, the light-emitting area of the selected lamp source 110 is about 2.5mm, and the reflecting surface is designed according to the light-emitting characteristics of this light-emitting area, and the height of the reflecting surface is designed to be 3.9mm, the height is proportional to the aperture of the opening of the reflecting surface.

Based on the positioning height of 3.9mm and the light supplementing range of a single reflecting surface, the reflecting surface is calculated to be oval, that is, the concave space 214 of the reflecting element 210 is oval, and its shape is as shown in Fig. 10 to Fig. 12. The short axis M of the concave space 214 is 11.2mm, and the long axis N is 12.5mm. The center of the lamp source 110 is located on the middle line of the short axis of the concave space 214 and along the long axis direction. The ratio of the distances between the center of the lamp source 110 and two sides of the end face 213 is N1:N2. In a specific embodiment, N1:N2=4.4:8.1, that is, the ratio of the distance from the center of the lamp source 110 to the left side of the concave space 214 to the distance from the center of the lamp source 110 to the right side of the concave space 214 is 4.4:8.1. At this time, the light-emitting surface of the lamp source 110 is almost coincident with the reflecting surface.

In a specific embodiment, the inner surface of the reflecting element 210 is electroplated with a silver layer to form a reflecting surface to reflect the light supplementing source generated by the lamp source 110.

In a specific embodiment, the reflecting element 210 includes a reflector, and the cross section of the reflector in the second direction has a varying curvature, and the cross section in the third direction has a varying curvature. Based on this arrangement, the overall structure of the reflecting element 210 is guaranteed to a certain extent, and at the same time, it is also beneficial to the manufacture of the entire reflecting element 210. It should be pointed out here that the reflecting element 210 can be manufactured integrally.

In the embodiment of the present disclosure, the light supplementing lamp component 10 further includes a lamp plate 120, on which the lamp source 110 is arranged. The lamp plate 120 is at least partially annular in structure, and the size of the outer peripheral surface of the annular structure is smaller than the size of the inner peripheral surface of the lampshade 600. Specifically, the lamp plate 120 is designed as a U-shaped irregular shape, and the space inside the lamp plate 120 is used to step aside the lens component 400. Due to adopting the way of reverse illumination, the lamp source 110 is suspended and can't be blocked by too many obstructions to avoid affecting the light transmitting efficiency, and changing the light type. Considering the factors of shading, fixing and heat dissipation, etc., the lamp plate 120 is designed as a strip plate with a width of 4mm. Thus, the lamp plate 120 is a strip plate structure with a width of 4 mm and a shape similar to a U-shape.

Referring to Fig. 8, in some embodiments of the present disclosure, in order to realize the installation of the lamp source 110, a protrusion 123 is arranged at the outer edge of the annular structure of the lamp plate 120. According to the number of light supplementing lamps, a corresponding number of protrusions 123 may be arranged. The lamp source 110 is arranged on the side of the protrusion 123. Specifically, the lamp source 110 is welded on the protrusion 123; the lamp source 110 may be an LED lamp bead, and the package size type of the LED lamp bead is 3030, and a margin of more than 0.5mm on one side is guaranteed.

In order to install the lamp plate 120 into the interior of the lampshade 600, the size of the outer peripheral surface of the annular structure is designed to be smaller than that of the inner peripheral surface of the lampshade 600, so as to facilitate to embed the lamp plate 120 into the interior of the lampshade 600. Then the lamp plate 120 is fixed on the lampshade 600 with fasteners 700.

Please refer to Fig. 7, Fig. 8 and Fig. 13, in order to fix the lamp plate 120, in some embodiments of the present disclosure, a positioning column 630 is provided on the inner surface of one end of the lamp cover 600, and a first positioning hole 121 is provided on the lamp plate 120. When the lamp plate 120 is installed inside the lampshade 600, the side surface of the lamp plate 120 is fitted with the wall surface of one end of the lampshade 600, and the positioning column 630 penetrates through the first positioning hole 121, so that the lamp plate 120 can be positioned by the positioning column 630 to facilitate the installation of the lamp plate 120. Of course, the positioning column 630 can restrict the lamp plate 120 from moving radially along the positioning column 630 relative to the lampshade 600 to a certain extent, so as to play a certain limiting role. In some embodiments of the present disclosure, there are two positioning columns 630, which are arranged at intervals, and there are also two first positioning holes 121, wherein one first positioning hole 121 is a round hole, which is adapted to one positioning column 630, and the other first positioning hole 121 is a long hole. When the lamp plate 120 is placed on the surface of one end of the lampshade 600, two first positioning holes 121 are respectively sleeved on the two positioning columns 630, and one positioning column 630 can move in the long hole of the corresponding first positioning hole 121 to adjust the position of the lamp plate 120, which not only ensures the relative positioning between the lamp plate 120 and the lampshade 600, but also increases the fault tolerance rate of the assembly between the lamp plate 120 and the lampshade 600.

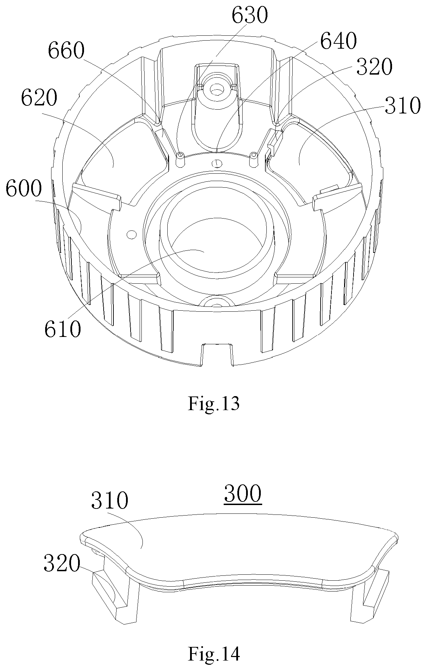

Meanwhile, in order to position the reflecting element 210 after the lamp plate 120 is positioned, in the embodiment of the present disclosure, the light supplementing lamp component 10 further includes a reflective substrate 220. The reflective substrate 220 is provided with a second positioning hole 221, please refer to Figs. 9 and 13 for details. The reflecting element 210 is arranged on the reflective substrate 220. When the reflective substrate 220 is installed inside the lampshade 600, the side surface of the reflective substrate 220 is fitted with the wall surface at one end of the lampshade 600, and the positioning column 630 penetrates through the second positioning hole 221, so that the reflecting element 210 can be positioned by the positioning column 630 to facilitate the installation of the reflecting element 210. Of course, the positioning column 630 can also restrict the reflecting element 210 from moving in the radial direction of the positioning column 630 relative to the lampshade 600 to a certain extent, so as to play a certain limiting role. In some embodiments of the present disclosure, there are two second positioning holes 221 and two corresponding positioning columns 630, wherein one second positioning hole 221 is a round hole and the other second positioning hole 221 is a long hole. Thus, when two positioning columns 630 respectively penetrate through the two second positioning holes 221, the positioning columns 630 can be finely adjusted in the long holes, thus not only ensuring the positioning of the reflecting element 210, but also increases the fault tolerance rate of the assembly between the reflecting element 210 and the lampshade 600.

In some embodiments of the present disclosure, in order to fix the lamp plate 120 and the reflective substrate 220 inside the lampshade 600, as shown in Figs. 8, 9 and 13, in a specific embodiment, a first through hole 122 is provided in the lamp plate 120 and a second through hole 222 is provided in the reflective substrate 220, and at the same time, a threaded hole 640 is formed inside one end of the lampshade 600. When the first positioning hole 121 of the lamp plate 120 and the second positioning hole 221 of the reflective substrate 220 are both matched with the positioning column 630, the axes of the first through hole 122, the second through hole 222 and the threaded hole 640 are collinear, and then the fastener 700 is sequentially inserted into the second through hole 222, the first through hole 122 and the threaded hole 640. The fastener 700 has a threaded end, and the threaded end is matched with the threaded hole 640, so that the lamp plate 120 and the reflecting element 210 are fixed inside the lampshade 600 by the fastener 700. Please refer to Fig. 2 for details.

In an optional embodiment, the hemispherical camera includes two groups of light supplementing lamp components 10, wherein the two groups of light supplementing lamp components 10 are symmetrically arranged on the left and right sides of the lens component 400, the light supplementing sources emitted by the two groups of light supplementing lamp components 10 can form a light supplementing area, and the light supplementing source emitted by each group of light supplementing lamp components 10 has a first edge line and a second edge line, the first edge line and the central axis of the lens component 400 forming a first included angle α, the second edge line and the central axis of the lens component 400 forming a second included angle β. The first included angle α is not equal to the second included angle β, and optionally, the first included angle α is smaller than the second included angle β. Please refer to Figs. 5 and 6 for details.

Based on the above arrangement, the transmitted light supplementing sources can be spliced to form a whole light supplementing area through the light supplementing lamp components 10 on the left and right sides of the lens component 400. Due to the high edge cut-off of the light supplementing lamp plate of the reflecting component, it is necessary to accurately design the optical path of the reflecting element 210 to ensure the ideal splicing of the lamp plate, so as to avoid the splicing of bright and dark areas.

Please continue to refer to Fig. 5 and Fig. 6. The light supplementing source reflected by the reflecting element 210 should be included in the range of the first edge line and the second edge line. In order to avoid the defect of lamp plate superposition, it is designed that the first edge line is deflected by the first included angle α relative to the central axis of the lens component 400 in the direction of the lens component 400, and the second edge line is deflected by a second included angle β relative to the central axis of the lens component 400 in the direction away from the lens component 400. The first included angle α is smaller than the second included angle β. In this way, the light supplementing sources emitted by the two groups of light supplementing lamp components 10 bilaterally symmetrically arranged can be spliced into a whole field of light supplementing area.

In a specific embodiment, the angular range of the first included angle α shall not be greater than 5°, specifically including: 0.5°, 1°, 1.5°, 1.9°, 2.2°, 2.7°, 3.5°, 4.2°, 5°, and so on, and also including other degrees. In some embodiments of the present disclosure, the first included angle α may be 1.9°. The angle range of the second included angle β shall not be less than 30°, specifically including: 30°, 35°, 40°, 45°, 50°, 55°, and so on, and also including other degrees. In some embodiments of the present disclosure, the second included angle β is 45°. Based on the above arrangement, through the two groups of light supplementing lamp components 10 bilaterally symmetrically arranged, the light supplementing sources emitted by them may be spliced into a whole field of light supplementing area, so that the defect of spot superposition can be avoided.

In some embodiments of the present disclosure, the two groups of supplement lamp components 10 bilaterally symmetrically arranged form an included angle of 90° with respect to the optical axis of the lens component 400. Since the sphere head has a certain range of rotation and pitching in the spherical cover, the influence of the hemispherical base 1000 on the light when the sphere head is pitching may be avoided to the maximum extent based on the above arrangements.

Please refer to Fig. 13 and Fig. 14, in some embodiments of the present disclosure, the outer side of one end of the lampshade 600 is provided with a notch 650, and the notch 650 is arranged around the light supplementing hole 620. Specifically, the lamp cover 310 includes a plate-shaped cover body and two groups of hooks 320 connected to the cover body, and the two groups of hooks 320 are arranged back to back. When installing the lamp cover 310, the two groups of hooks 320 are inserted into the interior of the lampshade 600 through the light supplementing hole 620 and then pressed down, such that the cover body is embedded into the notch 650. At this time, the two groups of hooks 320 are hooked on the limiting parts 660 inside the lampshade 600, respectively, so as to install the lamp cover 310 on the lampshade 600. Based on the arrangement of the notch 650, it is beneficial for the light supplementing source reflected by the reflecting element 210 to be directed outwards, and the lamp cover 310 can cover the light supplementing lamp component 10 to prevent the user from touching the lamp plate 120 or the reflecting element 210 when adjusting the hemispherical camera.

In order to prevent the lamp cover 310 from interfering with the light supplementing source transmitted outward, optionally, the lamp cover 310 is made of highly light transparent material, so as to reduce the displacement change caused by the refraction of the light supplementing source in the lamp cover 310 to affect the emission direction of the light supplementing source. In some embodiments of the present disclosure, the thickness of the light-transmitting area of the lamp cover 310 is relatively uniform, that is, the curved surfaces of the inner surface and the outer surface are parallel to each other, so as to ensure that the angle of light does not change when transmitting through the lamp cover 310.

In some embodiments of the present disclosure, the light-transmitting area of the lamp cover 310 is not less than the area of the light supplementing source emitted by the light supplementing lamp component 10, so as to ensure that the light supplementing source will not be blocked by other opaque structures. Moreover, the area of the notch 650 is larger than the light-transmitting area of the lamp cover 310, so as to facilitate the assembly of the lamp cover 310.

Please refer to Fig. 16, in some embodiments of the present disclosure, a first flanging structure 670 is arranged outside one end of the lampshade 600, and a light barrier 800 is sleeved on the outer peripheral surface of the first flanging structure 670. The light barrier 800 is adhered to the outer peripheral surface of the first flanging structure 670 by double-sided adhesive. In addition, a second flanging structure 680 may be arranged inside one end of the lampshade 600, and the position of the second flanging structure 680 in the longitudinal direction protrudes from the contact surface between the reflecting element 210 and the lamp plate 120. The first flanging structure 670 and the second flanging structure 680 have been described in detail above, and will not be described in detail here.

A hemispherical camera disclosed in this embodiment may further include a front end component 900 and a hemispherical base 1000. The front end component 900 and the hemispherical base 1000 have been described in detail above, and will not be described in detail here.

The embodiments of the present disclosure have been described above with reference to the attached drawings, but the disclosure is not limited to the above specific embodiments, the above specific embodiments are only schematic, not restrictive.

## Claims

1. A hemispherical camera, comprising:
- a lampshade (600), which is provided with a lens hole (610) for installing a lens component (400), wherein a surrounding area of the lens hole (610) is provided with a light supplementing hole (620) for transmitting light outwards, and a lamp cover (310) is installed at the light supplementing hole (620);
- a transparent hood (500), which is arranged outside the lampshade (600) and covers the lampshade (600);
- a light supplementing lamp component (10), which is arranged inside the lampshade (600), the light supplementing lamp component (10) comprising:
- a lamp source (110) configured for generating a light supplementing source;
- a lamp plate (120) configured for arranging the lamp source (110);
- a reflecting element (210), which has a reflecting surface arranged opposite to the lamp source (110);
- **characterized in that** all of light supplementing sources generated by the lamp source (110) irradiate towards, via the reflecting surface, the lamp cover (310), and are directed outwards via the lamp cover (310) and the transparent hood (500), so as to supplement light in a monitoring area of the lens component (400);
- wherein the reflecting element (210) and the lamp cover (310) are longitudinally arranged on two sides of the lamp source (110) in a longitudinal direction.

2. The hemispherical camera according to claim 1,
wherein the reflecting element (210) and the lamp cover (310) are respectively arranged at two sides of the lamp plate (120) in the longitudinal direction, and the reflecting surface is arranged opposite to a surface of the lamp plate (120) where the lamp source (110) is located.

3. The hemispherical camera according to claim 1,
wherein a cross section of a reflection area of the reflecting element (210) in a first direction is an arc, and the first direction is parallel to a longitudinal direction.

4. The hemispherical camera according to claim 2,
wherein a geometric center of the reflecting surface deviates from a position of the lamp source (110).

5. The hemispherical camera according to claim 4,
- wherein the reflecting element (210) has a concave space (214) constituted by a first surface (211) and a second surface (212), and an end face (213) for connecting the first surface (211) and the second surface (212), a distance between two sides of the end face (213) in a second direction is greater than a distance between two sides of the end face (213) in a third direction,
- wherein the second direction is perpendicular to the third direction, and both the second direction and the third direction are perpendicular to a longitudinal direction.

6. The hemispherical camera according to claim 4,
wherein the reflecting element (210) has an oval concave space (214).

7. The hemispherical camera according to claim 5,
wherein a cross section of the reflecting element (210) in the second direction has a varying curvature, and a cross section of the reflecting element (210) in the third direction has a varying curvature.

8. The hemispherical camera according to claim 4,
wherein the hemispherical camera comprises two groups of the light supplementing lamp components (10), which are bilaterally symmetrically arranged on left and right sides of the lens component (400), and the light supplementing sources emitted by the two groups of the light supplementing lamp components (10) form a light supplementing area, the light supplementing source emitted by each group of light supplementing lamp components (10) respectively has a first edge line and a second edge line, wherein the first edge line and a central axis of the lens component (400) form a first included angle (α), and the second edge line and the central axis of the lens component (400) form a second included angle (β), and the first included angle (α) is not equal to the second included angle (β).

9. The hemispherical camera according to claim 8,
wherein the first included angle (α) is smaller than the second included angle (β).

10. The hemispherical camera according to claim 9,
wherein the first included angle (α) is not more than 5°, and the second included angle (β) is not less than 30°.

11. The hemispherical camera according to claim 4,
wherein the lamp plate (120) is in a U-shaped structure, and an outer edge size of the U-shaped structure is smaller than an inner edge size of the lampshade (600), so that the lamp plate (120) can be arranged along the inner edge of the lampshade (600).

12. The hemispherical camera according to claim 11,
wherein a protrusion (123) is arranged at an outer edge of the U-shaped structure, and the lamp source (110) is arranged on the side of the protrusion (123).

13. The hemispherical camera according to claim 12,
wherein the light supplementing lamp component (10) further comprises a reflective substrate (220), and the reflecting element (210) is arranged on the reflective substrate (220).

14. The hemispherical camera according to claim 13,
wherein a second through hole (222) is provided on the reflective substrate (220), a first through hole (122) is provided on the lamp plate (120), and a threaded hole (640) is provided in the lampshade (600); the axes of the first through hole (122), the second through hole (222) and the threaded hole (640) are collinear, and penetrated by a fastener (700) with a threaded end; the fastener (700) is screwed with the threaded hole (640).

## Patentansprüche

1. Halbkugelförmige Kamera, umfassend:
- einen Lampenschirm (600), der mit einem Linsenloch (610) zum Installieren einer Linsenkomponente (400) bereitgestellt ist, wobei ein Umgebungsbereich des Linsenloches (610) mit einem Lichtergänzungsloch (620) zur Lichtübertragung nach außen bereitgestellt ist und eine Lampenabdeckung (310) am Lichtergänzungsloch (620) installiert ist;
- eine transparente Haube (500), die außerhalb des Lampenschirms (600) angeordnet ist und den Lampenschirm (600) abdeckt;
- eine Lichtergänzungslampenkomponente (10), die im Inneren des Lampenschirms (600) angeordnet ist, wobei die Lichtergänzungslampenkomponente (10) umfasst:
- eine Lampenquelle (110), die zum Erzeugen einer Lichtergänzungsquelle konfiguriert ist;
- eine Lampenplatte (120), die zum Anordnen der Lampenquelle (110) konfiguriert ist;
- ein reflektierendes Element (210), das eine reflektierende Oberfläche aufweist, die gegenüber der Lampenquelle (110) angeordnet ist;
- **dadurch gekennzeichnet, dass** alle von der Lampenquelle (110) erzeugten Lichtergänzungsquellen über die reflektierende Oberfläche in Richtung der Lampenabdeckung (310) strahlen, und über die Lampenabdeckung (310) und die transparente Haube (500) nach außen gerichtet sind, um Licht in einem Überwachungsbereich der Linsenkomponente (400) zu ergänzen;
- wobei das reflektierende Element (210) und die Lampenabdeckung (310) in einer Längsrichtung längs auf zwei Seiten der Lampenquelle (110) angeordnet sind.

2. Halbkugelförmige Kamera nach Anspruch 1,
wobei das reflektierende Element (210) und die Lampenabdeckung (310) jeweils an zwei Seiten der Lampenplatte (120) in der Längsrichtung angeordnet sind, und die reflektierende Oberfläche derjenigen Oberfläche der Lampenplatte (120) gegenüber angeordnet ist, auf der sich die Lampenquelle (110) befindet.

3. Halbkugelförmige Kamera nach Anspruch 1,
wobei ein Querschnitt eines Reflexionsbereichs des reflektierenden Elements (210) in einer ersten Richtung ein Bogen ist und die erste Richtung parallel zu einer Längsrichtung verläuft.

4. Halbkugelförmige Kamera nach Anspruch 2,
wobei ein geometrischer Mittelpunkt der reflektierenden Oberfläche von einer Position der Lampenquelle (110) abweicht.

5. Halbkugelförmige Kamera nach Anspruch 4,
- wobei das reflektierende Element (210) einen konkaven Raum (214), der aus einer ersten Oberfläche (211) und einer zweiten Oberfläche (212) besteht, und eine Endfläche (213) zum Verbinden der ersten Oberfläche (211) und der zweiten Oberfläche (212) aufweist, wobei ein Abstand zwischen zwei Seiten der Endfläche (213) in einer zweiten Richtung größer ist als ein Abstand zwischen zwei Seiten der Endfläche (213) in einer dritten Richtung,
- wobei die zweite Richtung senkrecht zur dritten Richtung steht, und beide, die zweite Richtung und die dritte Richtung senkrecht zu einer Längsrichtung verlaufen.

6. Halbkugelförmige Kamera nach Anspruch 4,
wobei das reflektierende Element (210) einen ovalen konkaven Raum (214) aufweist.

7. Halbkugelförmige Kamera nach Anspruch 5,
wobei ein Querschnitt des reflektierenden Elements (210) in der zweiten Richtung eine sich ändernde Krümmung aufweist und ein Querschnitt des reflektierenden Elements (210) in der dritten Richtung eine sich ändernde Krümmung aufweist.

8. Halbkugelförmige Kamera nach Anspruch 4,
wobei die halbkugelförmige Kamera zwei Gruppen der Lichtergänzungslampenkomponenten (10) umfasst, die beidseitig symmetrisch auf der linken und rechten Seite der Linsenkomponente (400) angeordnet sind, und die von den beiden Gruppen von den Lichtergänzungslampenkomponenten (10) emittierten Lichtergänzungsquellen einen Lichtergänzungsbereich bilden, wobei die von jeder Gruppe von Lichtergänzungslampenkomponenten (10) emittierte Lichtergänzungsquelle jeweils eine erste Randlinie und eine zweite Randlinie aufweist, wobei die erste Randlinie und eine Mittelachse der Linsenkomponente (400) einen ersten eingeschlossenen Winkel (α) bilden und die zweite Randlinie und die Mittelachse der Linsenkomponente (400) einen zweiten eingeschlossenen Winkel (β) bilden, und der erste eingeschlossene Winkel (α) nicht gleich dem zweiten eingeschlossenen Winkel (β) ist.

9. Halbkugelförmige Kamera nach Anspruch 8,
wobei der erste eingeschlossene Winkel (α) kleiner ist als der zweite eingeschlossene Winkel (β).

10. Halbkugelförmige Kamera nach Anspruch 9,
wobei der erste eingeschlossene Winkel (α) nicht mehr als 5° beträgt und der zweite eingeschlossene Winkel (β) nicht weniger als 30° beträgt.

11. Halbkugelförmige Kamera nach Anspruch 4,
wobei die Lampenplatte (120) in einer U-förmigen Struktur ist und eine äußere Randgröße der U-förmigen Struktur kleiner ist als eine innere Randgröße des Lampenschirms (600), sodass die Lampenplatte (120) entlang des inneren Randes des Lampenschirms (600) angeordnet werden kann.

12. Halbkugelförmige Kamera nach Anspruch 11,
wobei ein Vorsprung (123) an einem äußeren Rand der U-förmigen Struktur angeordnet ist und die Lampenquelle (110) an der Seite des Vorsprungs (123) angeordnet ist.

13. Halbkugelförmige Kamera nach Anspruch 12,
wobei die Lichtergänzungslampenkomponente (10) weiter ein reflektierendes Substrat (220) umfasst und das reflektierende Element (210) auf dem reflektierenden Substrat (220) angeordnet ist.

14. Halbkugelförmige Kamera nach Anspruch 13,
wobei auf dem reflektierenden Substrat (220) eine zweite Durchgangsloch (222) bereitgestellt ist, auf der Lampenplatte (120) ein erstes Durchgangsloch (122) bereitgestellt ist, und im Lampenschirm (600) ein Gewindeloch (640) bereitgestellt ist; die Achsen des ersten Durchgangsloches (122), des zweiten Durchgangsloches (222) und des Gewindeloches (640) kollinear sind, und werden von einem Befestigungselement (700) mit einem Gewindeende durchdrungen sind; das Befestigungselement (700) ist mit dem Gewindeloch (640) verschraubt.

## Revendications

1. Caméra hémisphérique, comprenant :
- un abat-jour (600), qui est muni d'un trou de lentille (610) pour installer un composant de lentille (400), dans lequel une zone entourant le trou de lentille (610) est munie d'un trou d'appoint de lumière (620) pour transmettre la lumière vers l'extérieur, et un couvercle de lampe (310) est installé au niveau du trou d'appoint de lumière (620) ;
- un capot transparent (500), qui est agencé à l'extérieur de l'abat-jour (600) et recouvre l'abat-jour (600) ;
- un composant d'éclairage d'appoint (10), agencé à l'intérieur de l'abat-jour (600), le composant d'éclairage d'appoint (10) comprenant :
- une source lumineuse (110) configurée pour générer une source lumineuse complémentaire ;
- une plaque de lampe (120) configurée pour agencer la source lumineuse (110) ;
- un élément réfléchissant (210), qui présente une surface réfléchissante agencée à l'opposé de la source lumineuse (110) ;
- **caractérisé en ce que** toutes les sources lumineuses supplémentaires générées par la source lumineuse (110) irradient vers, via la surface réfléchissante, le couvercle de la lampe (310), et sont dirigées vers l'extérieur via le couvercle de la lampe (310) et le capot transparent (500), afin de compléter la lumière dans une zone de surveillance du composant de lentille (400) ;
- dans lequel l'élément réfléchissant (210) et le couvercle de lampe (310) sont agencés longitudinalement de deux côtés de la source lumineuse (110) dans une direction longitudinale.

2. Caméra hémisphérique selon la revendication 1,
dans lequel l'élément réfléchissant (210) et le couvercle de lampe (310) sont respectivement agencés de deux côtés de la plaque de lampe (120) dans la direction longitudinale, et la surface réfléchissante est agencée en face d'une surface de la plaque de lampe (120) où se trouve la source lumineuse (110).

3. Caméra hémisphérique selon la revendication 1,
dans lequel une section transversale d'une zone de réflexion de l'élément réfléchissant (210) dans une première direction est un arc, et la première direction est parallèle à une direction longitudinale.

4. Caméra hémisphérique selon la revendication 2,
dans lequel un centre géométrique de la surface réfléchissante s'écarte de la position de la source lumineuse (110).

5. Caméra hémisphérique selon la revendication 4,
- dans lequel l'élément réfléchissant (210) présente un espace concave (214) constitué d'une première surface (211) et d'une seconde surface (212), et d'une face d'extrémité (213) reliant la première surface (211) et la seconde surface (212), une distance entre deux côtés de la face d'extrémité (213) dans une deuxième direction est supérieure à la distance entre deux côtés de la face d'extrémité (213) dans une troisième direction,
- dans lequel la deuxième direction est perpendiculaire à la troisième direction, et la deuxième direction et la troisième direction sont toutes deux perpendiculaires à une direction longitudinale.

6. Caméra hémisphérique selon la revendication 4,
dans lequel l'élément réfléchissant (210) présente un espace concave ovale (214).

7. Caméra hémisphérique selon la revendication 5,
dans lequel une section transversale de l'élément réfléchissant (210) dans la deuxième direction présente une courbure variable, et une section transversale de l'élément réfléchissant (210) dans la troisième direction présente une courbure variable.

8. Caméra hémisphérique selon la revendication 4,
dans lequel la caméra hémisphérique comprend deux groupes de composants de lampe d'appoint (10), qui sont agencés de manière bilatéralement symétrique sur les côtés gauche et droit du composant de lentille (400), et les sources lumineuses d'appoint émises par les deux groupes de composants de lampe d'appoint (10) forment une zone d'appoint lumineuse, la source lumineuse d'appoint émise par chaque groupe de composants de lampe d'appoint (10) présente respectivement une première ligne de bord et une seconde ligne de bord, dans laquelle la première ligne de bord et un axe central du composant de lentille (400) forment un premier angle inclus (α), et la seconde ligne de bord et l'axe central du composant de lentille (400) forment un second angle inclus (β), et le premier angle inclus (α) n'est pas égal au second angle inclus (β).

9. Caméra hémisphérique selon la revendication 8,
dans lequel le premier angle inclus (α) est plus petit que le second angle inclus (β).

10. Caméra hémisphérique selon la revendication 9,
dans lequel le premier angle inclus (α) ne dépasse pas 5° et le second angle inclus (β) ne dépasse pas 30°.

11. Caméra hémisphérique selon la revendication 4,
dans lequel la plaque de lampe (120) est dans une structure en forme de U, et la taille du bord extérieur de la structure en forme de U est plus petite que la taille du bord intérieur de l'abat-jour (600), de sorte que la plaque de lampe (120) peut être agencée le long du bord intérieur de l'abat-jour (600).

12. Caméra hémisphérique selon la revendication 11,
dans lequel une protubérance (123) est agencée sur un bord extérieur de la structure en forme de U, et la source de lampe (110) est agencée sur le côté de la protubérance (123).

13. Caméra hémisphérique selon la revendication 12,
dans lequel le composant de lampe d'appoint (10) comprend en outre un substrat réfléchissant (220), et l'élément réfléchissant (210) est agencé sur le substrat réfléchissant (220).

14. Caméra hémisphérique selon la revendication 13,
dans lequel un second trou traversant (222) est prévu sur le substrat réfléchissant (220), un premier trou traversant (122) est prévu sur la plaque de lampe (120) et un trou fileté (640) est prévu dans l'abat-jour (600) ; les axes du premier trou traversant (122), du second trou traversant (222) et du trou fileté (640) sont colinéaires et traversés par une fixation (700) avec une extrémité filetée ; la fixation (700) est vissée dans le trou fileté (640).
